Europäisches Patentamt

European Patent Office

Office européen des brevets

(19)

(11) Veröffentlichungsnummer : **0 482 047 B1**

(12) **EUROPÄISCHE PATENTSCHRIFT**

(45) Veröffentlichungstag der Patentschrift :
**10.05.95 Patentblatt 95/19**

(51) Int. Cl.$^6$ : **H04N 1/10, H04N 1/393**

(21) Anmeldenummer : **90910706.2**

(22) Anmeldetag : **06.07.90**

(86) Internationale Anmeldenummer :
**PCT/EP90/01097**

(87) Internationale Veröffentlichungsnummer :
**WO 91/01070 24.01.91 Gazette 91/03**

(54) VORRICHTUNG ZUM UMWANDELN VON LICHTSIGNALEN IN VIDEOSIGNALE.

Teilanmeldung 94116459.2 eingereicht am
19.10.94.

(30) Priorität : **08.07.89 DE 3922512**

(43) Veröffentlichungstag der Anmeldung :
**29.04.92 Patentblatt 92/18**

(45) Bekanntmachung des Hinweises auf die
Patenterteilung :
**10.05.95 Patentblatt 95/19**

(84) Benannte Vertragsstaaten :
**DE FR GB**

(56) Entgegenhaltungen :
**WO-A-89/10036
US-A- 4 580 172
US-A- 4 633 306
US-A- 4 812 917**

(73) Patentinhaber : **KODAK
AKTIENGESELLSCHAFT**
**D-70323 Stuttgart (DE)**
(84) **DE**
Patentinhaber : **EASTMAN KODAK COMPANY**
**343 State Street**
**Rochester, New York 14650-2201 (US)**
(84) **FR GB**

(72) Erfinder : **MUTZE, Ulrich, Dr.**
**Aberlin-Jörg-Strasse 20**
**W-7000 Stuttgart 60 (DE)**
Erfinder : **RENNER, Meinrad**
**Gayernweg 10**
**W-7300 Esslingen (DE)**

(74) Vertreter : **Lewandowsky, Klaus, Dipl.-Ing. et al**
**Kodak Aktiengesellschaft,**
**Patentabteilung**
**D-70323 Stuttgart (DE)**

EP 0 482 047 B1

## Beschreibung

Die Erfindung betrifft eine Vorrichtung zum Umwandeln der Lichtsignale von gewünschten Ausschnitten eines flachen Gegenstandes, der sich im wesentlichen in einer Dingebene erstreckt, z.B. eines Diapositives oder eines Dianegatives, in Videosignale.

Vorrichtungen dieser Art mit einem Gehäuse, einem ersten Träger für den Gegenstand, einem zweiten Träger für einen CCD-Sensor, der den gewünschten Ausschnitt punktweise abtastet und in Videosignale umwandelt, und einer ein Objektiv aufweisenden optischen Einrichtung, die zur Abbildung des gewünschten Ausschnittes auf dem CCD-Sensor einstellbar ist und eine optische Achse definiert, sind z.B. bekannt durch den Kodak SV 500 Videotransfer Stand (Zeitschrift foto-contact 11/87, Seite 19) und den Fotovix film/videoprocessor der Firma Tamron, der im Aufsatz "Slides on the move" in der Zeitschrift Industrial Photography, Februar 1988, Seite 31, beschrieben ist. Bei diesen bekannten Vorrichtungen wird als Objektiv ein Zoom-Objektiv benutzt, um zur Abbildung von verschieden großen Ausschnitten des Gegenstandes diesen verschieden vergrößern zu können.

Die bekannten Vorrichtungen sind verhältnismäßig sperrig und teuer.

Der Erfindung liegt die Aufgabe zugrunde, eine Vorrichtung mit möglichst kleinen Abmessungen und geringem Kostenaufwand zu schaffen.

Diese Aufgabe ist bei einer Vorrichtung mit den eingangs genannten Merkmalen dadurch gelöst, daß ein Objektiv mit konstanter Brennweite vorhanden ist, daß die optische Einrichtung mindestens zwei längs der optischen Achse einstellbare Elemente aufweist, deren Lage die Bild- und die Gegenstandweite bestimmen, und daß beide Elemente durch ein Getriebe so verbunden sind, daß bei den durch dieses eingestellten Bild- und Gegenstandsweiten das Objektiv den Ausschnitt des Gegenstandes scharf auf dem CCD-Sensor abbildet.

Durch die Verwendung eines Objektivs mit konstanter Brennweite kann die Vorrichtung mit gleich guter optischer Qualität wie mit den bekannten Vorrichtungen wesentlich billiger und raumsparender hergestellt werden. Auch läßt sich die Abbildungsqualität durch Wahl eines entsprechend hochentwickelten Objektivs gegenüber einem Zoom-Objektiv wesentlich verbessern.

Bei einer vorteilhaften Ausführungsform der Erfindung ist vorgesehen, daß der Objektivträger im Gehäuse fest angeordnet und die Träger des Gegenstandes und des CCD-Sensors als verfahrbare Wagen ausgebildet sind. Dadurch ergibt sich eine besonders einfache Ausbildung des Getriebes mit den folgenden Eigenschaften: eine mit dem Gegenstandswagen verbundene Kurvenleiste mit einer Führungskurve, einen im Gehäuse drehbar gelagerten Hebel, eine erste Tastrolle und eine zweite Tastrolle, die am Hebel drehbar gelagert sind, von denen die erste an der Führungskurve und die zweite am Bildwagen anliegen und eine Feder, die auf den Bildwagen in einer die Bildweite verringernden Richtung einwirkt und dadurch den Bildwagen an die zweite Rolle und über den Hebel die erste Rolle an die Führungskurve drückt. Dies kann entweder durch eine Verbindung des Bildwagens mit dem Gehäuse oder des Bildwagens mit dem Gegenstandswagen mittels der Feder erreicht werden.

Hierbei kann die Anordnung so getroffen werden, daß die Kurvenleiste in ihrer Längsrichtung verstellbar mit dem Gegenstandswagen verbunden ist und daß zum Verstellen der Kurvenleiste eine Schraube und in der einen Endwand des Gehäuses eine Aussparung für diese Schraube vorhanden sind, aus der die Schraube herausragt, wenn der Gegenstandswagen für die kleinste Gegenstandsweite ($g_{min}$) eingestellt ist. Dadurch wird die Möglichkeit geschaffen, das Getriebe nach der Lage der jeweiligen Gegenstandsebene zu justieren und zwar so, daß diese Justierung nur bei der größten Vergrößerung also mit der größtmöglichen Genauigkeit durchführbar ist.

Eine vorteilhafte bauliche Ausgestaltung der Vorrichtung gemäß der Erfindung ist dadurch gekennzeichnet, daß im Gehäuse zwei zur optischen Achse parallele Führungsstangen für den Gegenstandswagen und den Bildwagen vorhanden sind, daß der Gegenstandswagen einen Spiegel, der zur Bildung einer Umlenkung der optischen Achse mit dieser einen Winkel von 45° einschließt, und zwei miteinander verbundene Teile aufweist, von denen der eine obere Teil über einer Deckwand des Gehäuses angeordnet ist und der andere untere Teil im Inneren des Gehäuses auf den Führungsstangen geführt ist, daß auf dem oberen Teil des Gegenstandswagens eine Drehscheibe gelagert ist und daß der Gegenstandshalter mit einer über ihm angeordneten Lampe eine auf der Drehscheibe in zwei zur Umlenkung der optischen Achse senkrechte Richtungen verschiebbare und um die Umlenkung drehbare bauliche Einheit bildet.

Diese bauliche Einheit kann hierbei als Griff für die Hand einer Bedienungsperson ausgebildet sein. Legt die Bedienungsperson ihre Hand auf den oberen Teil des Gegenstandswagen und erfaßt die bauliche Einheit mit den Fingern, dann kann jeder beliebige Ausschnitt mittels der einen Hand durch Verschieben des Wagens und der baulichen Einheit im Bildschirm eines vom CCD-Sensor gesteuerten Monitors abgebildet werden.

Auch ist es möglich, hierbei mit den Fingern die bauliche Einheit zu drehen, um z.B. Dias mit Hoch- und Querformat immer durch den CCD-Sensor aufrecht abzubilden.

EP 0 482 047 B1

Anstatt den Träger des CCD-Sensors und den Träger des Gegenstandes als verfahrbare Wagen auszubilden, die mittels des Getriebes zur Einstellung von Bild- und Gegenstandsweite verstellbar sind, kann bei einem Ausführungsbeispiel der Erfindung auch der Träger des CCD-Sensors und/oder der Gegenstandsträger längs der optischen Achse unverschiebbar angeordnet sein. In diesem Falle kann als mit dem Getriebe verbundenes, längs der optischen Achse einstellbares Element im Strahlengang zwischen dem Objektiv und dem unverschiebbar angeordneten Träger des CCD-Sensors und/oder dem längs der optischen Achse unverschiebbar angeordneten Gegenstandsträger ein im Strahlengang beweglich angeordneter Spiegel vorhanden sein, der durch das Getriebe so bewegbar ist, daß Bildweite und Gegenstandsweite durch Verstellen des Spiegels in gewünschter Weise veränderbar sind.

Der betreffende Spiegel kann als Dachspiegel ausgebildet sein, der zwei optisch miteinander zusammenwirkende reflektierende Flächen besitzt, die miteinander einen rechten Winkel einschließen. Diese Winkelstellung der Flächen ermöglicht eine Umkehr der Richtung des Strahlenganges um 180°, wobei eine Verstellung des Dachspiegels längs der optischen Achse zu einer Verlängerung oder Verkürzung des Strahlenganges führt.

Bei längs der optischen Achse unverschiebbar angeordnetem Gegenstandsträger ist dieser so am Gehäuse gelagert, daß der Gegenstand zur Ausrichtung gewünschter Ausschnitte auf die optische Achse in der zu dieser senkrechten Ebene beweglich gelagert ist und der Gegenstand vorzugsweise auch drehbar ist, beispielsweise mittels einer Drehscheibe.

Eine längs der optischen Achse unverschiebbare Anordnung des CCD-Sensors ist besonders vorteilhaft, wenn im Strahlengang unmittelbar vor der Sensorfläche Zusatzeinrichtungen vorhanden sind, die dazu dienen, die auf die Sensorfläche treffenden Lichtstrahlen zu beeinflussen. Bei diesen Einrichtungen kann es sich um einen Strahlversetzer handeln, der es ermöglicht, eine gesteuerte Strahlversetzung längs der Ebene der Sensorfläche zu bewirken. Bei einem CCD-Sensor, bei dem die Lücken zwischen aneinander angrenzenden Pixeln Empfindlichkeitssenken darstellen, ergibt sich dadurch die Möglichkeit, beim Aufbau des die Bildinformation des Gegenstandes wiedergebenden Videosignals schrittweise so vorzugehen, daß Lichtstrahlen, die ein und derselben Bildinformation entsprechen, durch Strahlversetzung auf verschiedenen Stellen der Sensorfläche auftreffen, so daß auch diejenige Bildinformation zur Signalerzeugung verwendet werden kann, die ohne Strahlversetzung auf eine Lücke zwischen Pixeln auftreffen würde.

Als Strahlversetzer können planparallele optische Platten vorgesehen sein, die unterschiedliche Neigungen relativ zur optischen Achse besitzen und wahlweise in den Strahlengang einführbar sind. Die planparallelen Platten können an einem Halter in Form eines Rades angebracht sein, wobei die planparallelen Platten in konzentrisch zur Drehachse des Rades gelegenen Ausschnitten gehalten sind. Durch Drehen des Rades mittels eines Stellantriebes können gewünschte planparallele Platten im Strahlengang zur Wirkung gebracht werden.

Als dem CCD-Sensor im Strahlengang vorgeschaltete Zusatzeinrichtung kann auch ein Farbfilterrad vorhanden sein, das es in üblicher Weise ermöglicht, mittels eines schwarz-weiß empfindlichen CCD-Sensors Farb-Videosignale zu erzeugen, indem die Farbinformation des Gegenstandes schrittweise unter Einschalten verschiedener Farbfilter in den Strahlengang abgetastet wird.

Die Vorrichtung gemäß der Erfindung ist für jede Art von Gegenständen und insbesondere auch für nicht durchscheinende Bilder verwendbar, die mit der optischen Einrichtung auf einer Sensorfläche des CCD-Sensors abbildbar sind.

Die Erfindung ist in der folgenden Beschreibung von in den Zeichnungen schematisch vereinfacht dargestellten Ausführungsbeispielen im einzelnen erläutert.

Es zeigen:

Fig. 1 einen vertikalen Längsschnitt nach der Linie I - I in Fig.2 eines das Prinzip der Erfindung darstellenden, nur gedachten ersten Ausführungsbeispiels;

Fig. 2 einen Schnitt nach der Linie II - II in Fig.1;

Fig. 3 ein Diagramm, bei dem über dem Gegenstandsabstand g als Abszisse der Bildabstand b und die Vergrößerung Gamma dargestellt sind, wobei als Längeneinheit die Brennweite des Objektivs gewählt worden ist;

Fig. 4 eine schaubildliche, stark vereinfachte Darstellung eines verwirklichten zweiten Ausführungsbeispiels;

Fig. 5 eine teilweise aufgebrochene, schaubildliche Darstellung nur des Gegenstandswagens und des Bildwagens innerhalb des Gehäuses des zweiten Ausführungsbeispieles nach Fig. 4,

Fig. 6 eine in Fig.5 mit VI bezeichnete Einzelheit;

Fig. 7 eine Ansicht des Gegenstandswagens in Richtung des Pfeiles VII in Fig.5, wobei das Gehäuse im Schnitt dargestellt ist;

3

| Fig. 8 und 9 | eine Seitenansicht in Richtung des Pfeiles VIII in Fig.5 bzw. eine Draufsicht des Bildwagens; |
| Fig. 10 | eine Draufsicht der auf dem Gegenstandswagen des zweiten Ausführungsbeispieles mittels einer Drehscheibe drehbar gelagerten zwei Schlitten für den Gegenstandshalter; |
| Fig.11 und 12 | einen Schnitt nach den Linien XI - XI bzw. eine Seitenansicht in Richtung des Pfeiles XII in Fig.10 und |
| Fig. 13 und 14 | schematisch stark vereinfacht und längs vertikaler Schnittebenen aufgeschnitten gezeichnete Seitenansichten von zwei weiteren Ausführungsbeispielen. |

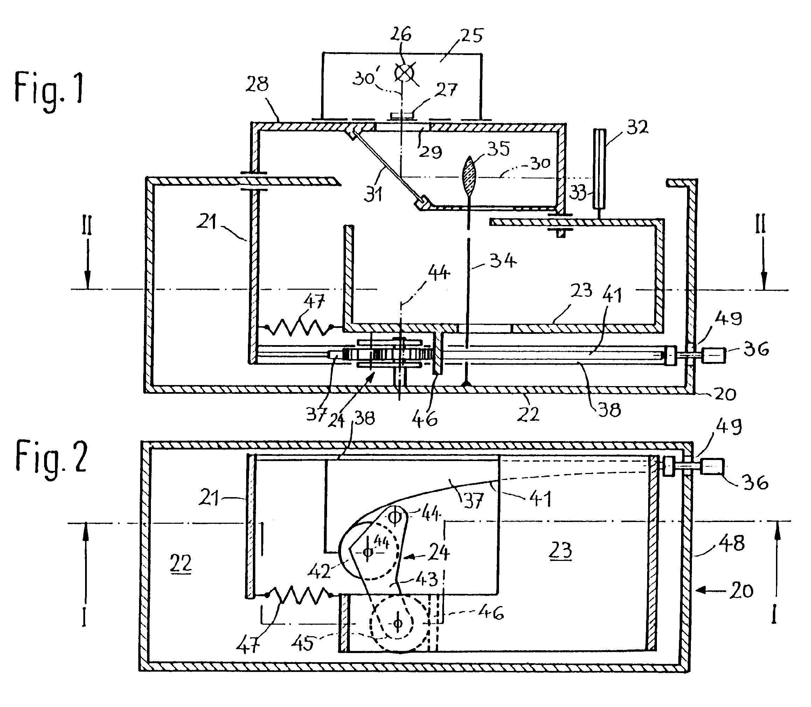

Die Prinzipdarstellung nach den Fig.1 und 2 eines gedachten Ausführungsbeispiels einer Vorrichtung zum Umwandeln der Lichtsignale von gewünschten Ausschnitten eines flachen Gegenstandes, z.B. eines Dias, in Videosignale weist ein Gehäuse 20 auf, innerhalb dessen ein als Gegenstandsträger dienender Gegenstandswagen 21 in der Zeichenebene und parallel zum Boden 22 des Gehäuses 20, also in Längsrichtung des Gehäuses, verschiebbar gelagert ist. In der gleichen Verschieberichtung verschiebbar ist ein Bildwagen 23 relativ zum Gegenstandswagen 21 verschiebbar mit diesem verbunden. Zwischen beiden Wagen ist ein als Ganzes mit 24 bezeichnetes Getriebe vorgesehen.

Auf dem Gegenstandswagen 21 ist eine bauliche Einheit 25 angeordnet.

Diese ist auf dem Gegenstandswagen in zwei zueinander senkrechten waagerechten Richtungen verschiebbar und um eine vertikale, zum Boden 22 senkrechte Achse drehbar mit dem Gegenstandswagen 21 verbunden. In der baulichen Einheit 25 befindet sich eine Lampe 26 und ein Halter 27 für ein den abzubildenden Gegenstand tragendes Diapositiv (im folgenden kurz "Dia" genannt). In der oberen Wandung 28 des Gegenstandswagens 21 befindet sich eine Öffnung 29. Unter der Öffnung 29 ist ein Spiegel 31 im Gegenstandswagen 21 fest angeordnet, dessen zur Zeichenebene senkrechte Spiegelebene unter einem Winkel von 45° gegenüber der Vertikalen geneigt ist. Auf dem Bildwagen 23 ist ein CCD-Sensor 32 so angeordnet, daß das Licht der Lampe 26, nachdem es das im Halter 27 angeordnete Dia passiert und vom Spiegel 31 reflektiert worden ist, auf die Sensorfläche 33 fällt. Auf dem Wege dieses Lichtstrahlenbündels vom Spiegel 31 zur Sensorfläche 33 ist auf einem Träger 34 ein Objektiv 35 angeordnet, das eine waagerechte optische Achse 30 definiert, die durch den Spiegel 31 in einer vertikalen Umlenkung 30' fortgesetzt ist. Der Träger 34 ist fest mit dem Gehäuse 20 verbunden.

Das den Gegenstandswagen 21 mit dem Bildwagen 23 verbindende Getriebe 24 weist eine Kurvenleiste 37 auf, die in einer Schwalbenschwanz-Führungsleiste 38 des Gegenstandswagens 21 parallel zur Zeichenebene in Fig.2 verschiebbar mit dem Gegenstandswagen 21 verbunden ist. Zum Verschieben der Kurvenleiste 37 relativ zum Gegenstandswagen 21 und damit zum Scharfeinstellen der optischen Einrichtung ist eine Rändelschraube 36 vorgesehen.

Die Kurvenleiste 37 ist mit einer Kurve 41 versehen, an der eine Tastrolle 42 anliegt, die an einem Hebel 43 drehbar gelagert ist, der um eine am Gehäuseboden 22 fest angeordnete Achse 44 schwenkbar ist und an seinem äußersten Ende eine zweite Tastrolle 45 trägt, die ebenfalls drehbar am Hebel 43 gelagert ist.

Die zweite Tastrolle 45 liegt an einem unteren Vorsprung 46 des Bildwagens 23 an. Dieser ist mit dem Gegenstandswagen 21 mittels einer Zugfeder 47 verbunden, durch die der Vorsprung 46 an die zweite Tastrolle 45 und die Kurve 41 in entgegengesetzter Richtung an die erste Tastrolle 42 gedrückt werden. Dadurch bestimmt das Getriebe 24 die relative Stellung des Gegenstandswagens 21 zum Bildwagen 23. Wird nämlich der Gegenstandswagen 21 horizontal in der Zeichenebene der Fig.1 nach links bewegt, dann folgt die Tastrolle 42 der Kurve 41 und schwenkt den Hebel 43 im Uhrzeigersinn, so daß durch die Kraft der Feder 47 der Bildwagen 23 dieser Schwenkbewegung des Hebels folgt. Durch diese aus der Darstellung in den Fig.1 und 2 nach links gerichtete Bewegung des Gegenstandswagens 21 wird die Gegenstandsweite oder der Gegenstandsabstand g des im Halter 27 gehaltenen Dias von der entsprechenden Hauptebene des Objektivs 35 vergrößert und gleichzeitig die Bildweite oder der Bildabstand b der Sensorfläche 33 von der entsprechenden Hauptebene des Objektivs 35 verringert. Die Kurve 41 ist dabei so ausgelegt, daß z.B. bei einer auf beiden Seiten gleichen Brennweite f des Objektivs 35 das Abbildungsgesetz

$$1/b + 1/g = 1/f$$

erfüllt ist.

Wie aus Fig.2 ersichtlich ist, ist für die Schraube 36 in der rechten Endwand 48 des Gehäuses 20 eine Aussparung 49 vorgesehen, aus der die Schraube 36 ganz heraustritt, wenn sich der Gegenstandswagen 21 in seiner in den Fig.1 und 2 äußerst rechten Stellung befindet, in der der Gegenstandsabstand $g_{min}$ den kleinsten Wert hat. In dieser Stellung wird die größte Vergrößerung des Bildes des Dias in der Ebene der Sensorfläche 33 abgebildet. In dieser Stellung kann durch Drehen der Schraube 36 das vom CCD-Sensor auf einem Monitor erzeugte Bild scharf eingestellt werden. Diese Scharfeinstellung ist insbesondere deswegen notwendig, weil die Vorrichtung sowohl für verglaste als auch nicht verglaste Dias verwendbar sein soll.

Durch die Schraube 36 kann die durch die Dicke des Glases bedingte Änderung des Gegenstandsabstandes berücksichtigt werden.

Aus der oben angegebenen Abbildungsgleichung ergibt sich die Abhängigkeit des Bildabstandes vom Gegenstandsabstand für den Fall, daß die Brennweite f als Längeneinheit gewählt wird, zu

$$b = g / (g - 1).$$

Der Vergrößerungsfaktor der oben beschriebenen optischen Einrichtung ergibt sich zu lineare Bildabmessung / lineare Gegenstandsabmessung = $b/g = \beta$.

Die Sensorflächenhöhe beträgt 1/6 von der Diahöhe. Nimmt man die Brennweite des Objektivs f = 1 als Längeneinheit, dann wird ein Dia auf der ganzen Sensorfläche bei einem Gegenstandsabstand g = 7 abgebildet, denn es ergibt sich dann ein Bildabstand von b = 7/6, demnach ein Vergrößerungsfaktor $\beta$ = 1/6.

Auf dem vom Sensor gesteuerten Monitor erscheint dann das volle Diabild. Diese Darstellung wird im folgenden als Vergrößerung 1 : 1 mit einem Vergrößerungsfaktor Gamma = 6 x $\beta$ bezeichnet.

Die folgende Tabelle gibt den Bildabstand b und die Vergrößerung Gamma in Abhängigkeit vom Gegenstandsabstand g bei f = 1 an:

| g | b | Gamma |
|---|---|---|
| 1,5 | 3 | 12 |
| 2 | 2 | 6 |
| 3 | 3/2=1,5 | 3 |
| 4 | 4/3=1,33 | 2 |
| 5 | 5/4=1,25 | 1,5 |
| 6 | 6/5=1,2 | 1,2 |
| 7 | 7/6=1,17 | 1 |

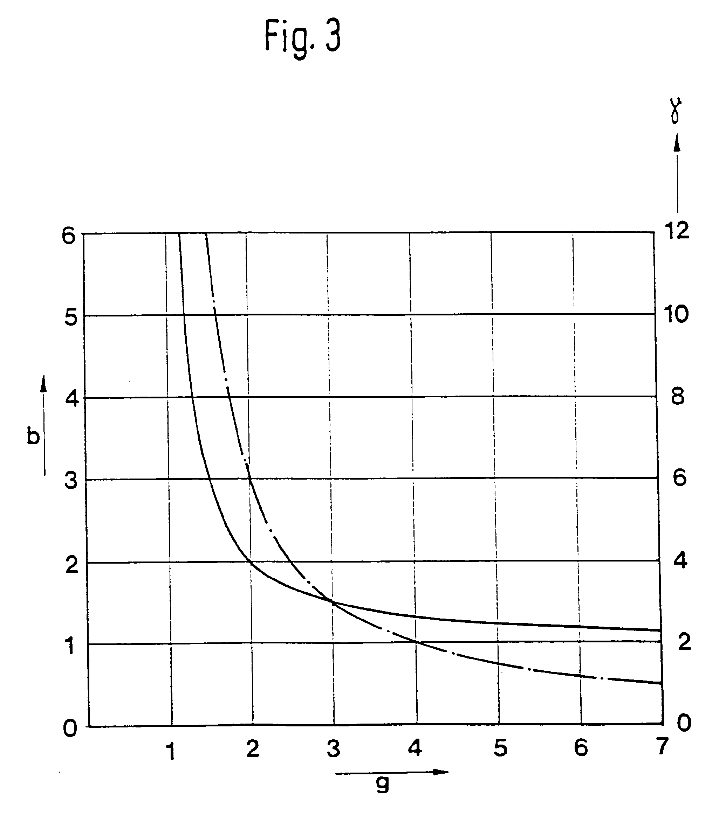

Fig.3 zeigt ein Diagramm, bei dem die Abhängigkeit des Bildabstandes b und der Vergrößerung Gamma (dort durch den griechischen Buchstaben angegeben) durch die ausgezogene Kurve bzw. die strichpunktierte Kurve dargestellt ist.

Die Betriebsweise der oben beschriebenen gedachten Ausführungsform ist denkbar einfach. Nachdem die Scharfeinstellung mit dem kleinsten Gegenstandsabstand $g_{min}$ eingestellt worden ist, wird der Gegenstandswagen 21 nach links bewegt, bis zu der Vergrößerung Gamma = 1. Jetzt wird die bauliche Einheit 25 so verschoben und gedreht, daß sich der gewünschte Ausschnitt in der Mitte des Bildschirmes des Monitors befindet.

Dann wird der Gegenstandswagen in der Darstellung nach den Fig. 1 und 2 nach rechts verschoben und dadurch der Gegenstandsabstand verringert, bis der ganze gewünschte Ausschnitt vergrößert den ganzen Bildschirm des Monitors ausfüllt.

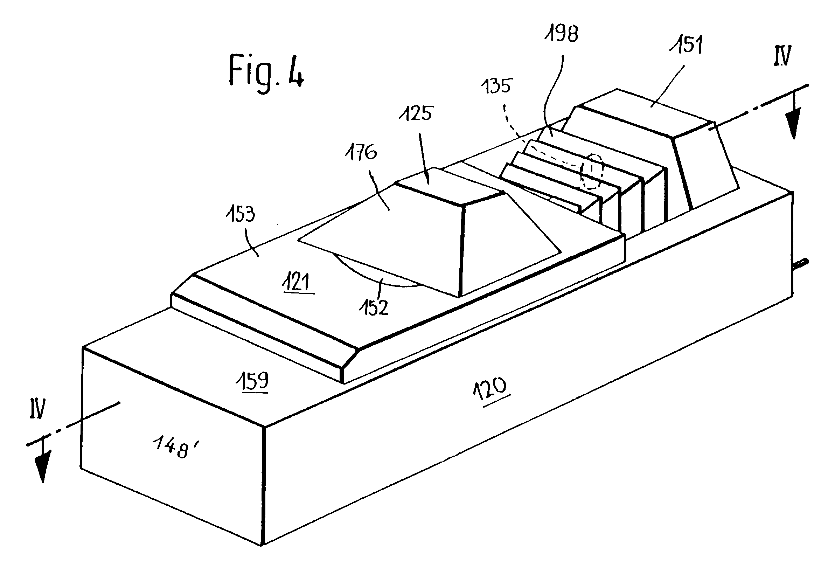

Bei dem im folgenden beschriebenen und in den Fig. 4 bis 12 dargestellten Ausführungsbeispiel sind diejenigen Teile, die den in den Fig.1 und 2 dargestellten Teilen in ihrer Funktion entsprechen, mit um 100 vergrößerten Bezugszahlen bezeichnet, so daß durch diesen Hinweis über die Bezugszahlen bei der Beschreibung des folgenden Ausführungsbeispiels auf die Beschreibung des vorhergehenden Ausführungsbeispiels Bezug genommen wird, um unnötige Wiederholungen zu vermeiden.

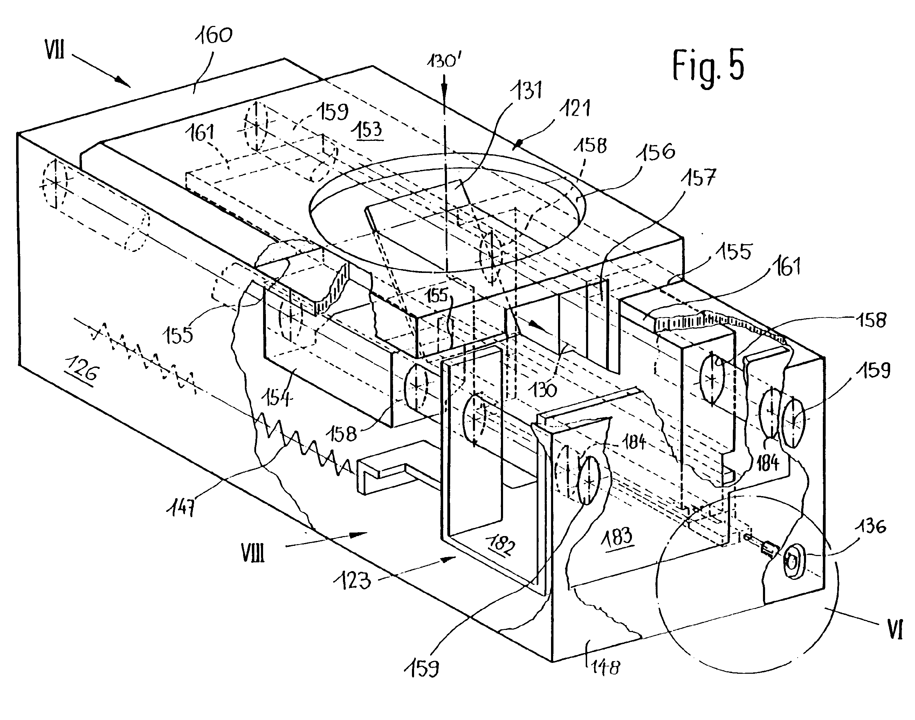

Die Fig. 4 zeigt stark vereinfacht die von außen sichtbaren Teile der Vorrichtung, nämlich das Gehäuse 120, den Gegenstandswagen 121, eine elektronische Einrichtung 151, die auf dem in der Fig. 4 nicht sichtbaren Bildwagen 123 (Fig. 5) den ebenfalls nicht dargestellten CCD-Sensor trägt und dazu dient, die vom CCD-Sensor empfangenen Lichtsignale in Videosignale umzuwandeln. Außerdem zeigt Fig. 4 die auf dem Gegenstandswagen angeordnete bauliche Einheit 125, die in zwei zueinander senkrechten Richtungen verschiebbar und mittels einer Drehscheibe 152 drehbar auf dem Gegenstandswagen 121 gelagert ist. In dem von einem Faltenbalg 198 verdeckten Raum zwischen dem Spiegel 131 und der elektronischen Einrichtung 151 ist das nur in Fig.4 angedeutete Objektiv 135 gehäusefest angeordnet, das die optische Achse 130 und ihre Umlenkung 130' definiert.

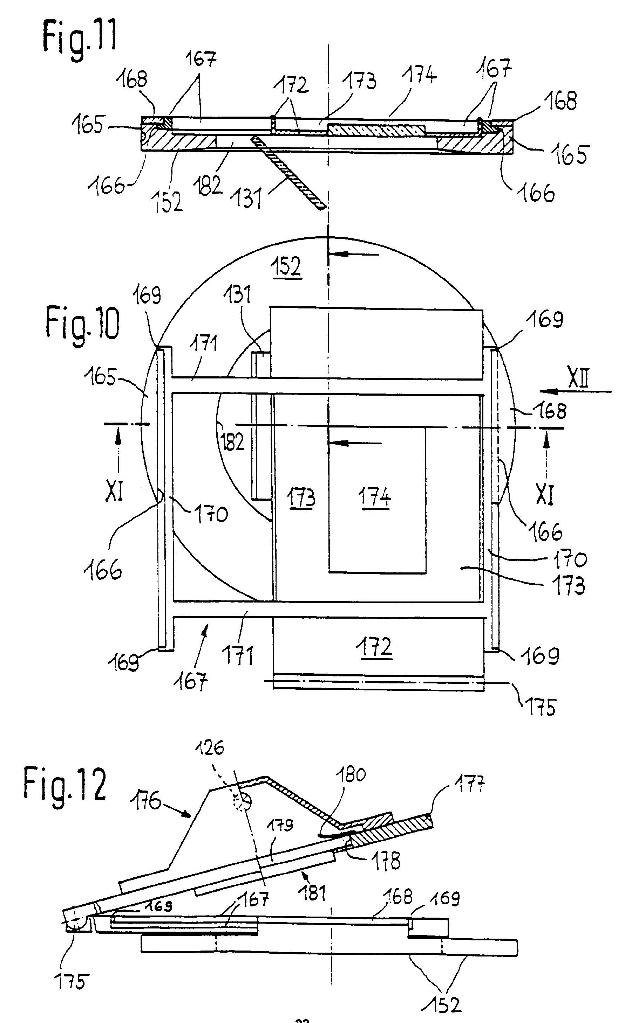

Bei diesem Ausführungsbeispiel weist der als Ganzes mit 121 bezeichnete Gegenstandswagen einen Oberteil 153 und einen Unterteil 154 auf (Fig.5). Diese beiden Teile sind unter Bildung von zwei sich an beiden Seiten waagerecht erstreckenden Schlitzen 155 zu einem massiven Stück verbunden, das oben eine runde Öffnung 156 für die um die Umlenkung 130' als Drehachse drehbare Drehscheibe 152 (Fig.10-12) und eine Aussparung 157 für den Spiegel 131 und das von der Lampe 126 (Fig.12) kommende und vom Spiegel 131 reflektierte Lichtbündel aufweist.

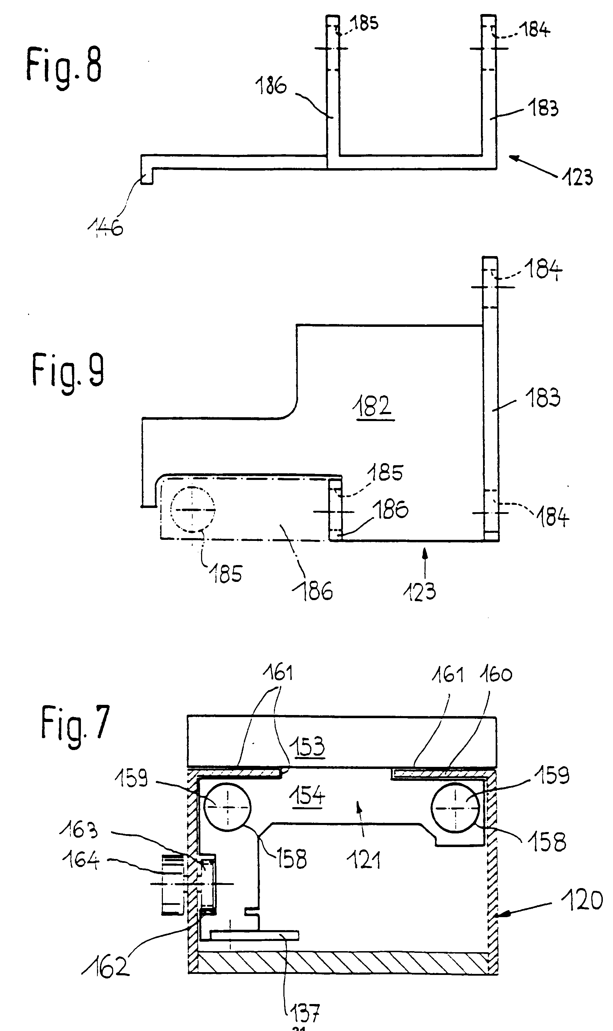

Im unteren Teil 154 des Gegenstandswagens 121 sind unterhalb eines jeden der beiden Schlitze 155 je eine Bohrung 158 vorgesehen, mittels deren der Gegenstandswagen 121 auf zwei einander parallelen, beim dargestellten Ausführungsbeispiel zylindrischen Stäben 159 geführt ist, die an den Endwänden 148 und 148′ (Fig.4) befestigt sind und sich parallel zur optischen Achse 130 erstrecken. Das Gehäuse 120 weist oben eine Deckwand 160 auf, die zur Aufnahme des die beiden Wagenteile 153 und 154 verbindenden Wagenteils mit einer sich längs der optischen Achse erstreckenden Aussparung 161 versehen ist (Fig. 5 und 7). Wie aus Fig.5 ersichtlich ist, erstreckt sich der Oberteil 153 weiter nach der in Fig.5 hinteren Endwand 148′ (Fig.4) des Gehäuses 120 als der untere Teil 154, und zwar um ein solches Stück, daß der Oberteil die Aussparung 161 in der vordersten Stellung des Gegenstandswagens 121 voll zudeckt und daß trotzdem ein Verschieben des Gegenstandswagens 121 bis zum größten Gegenstandsabstand möglich ist.

Wie das in Fig. 7 angedeutet ist, ist zum Axialverschieben des Wagens 121 eine Zahnstange 162 vorgesehen, die mit einem Ritzel 163 kämmt, das von einem außerhalb des Gehäuses 120 befindlichen Rändelrad 164 betätigt werden kann, so daß durch dieses Zahnstangengetriebe der Gegenstandswagen 121 selbsthemmend gehalten und durch Drehen des Rändelrades 164 immer auf den gewünschten Gegenstandsabstand und damit auf die gewünschte Vergrößerung eingestellt werden kann.

Die vom Gegenstandswagen 121 getragene bauliche Einheit 125 ist in den Fig.10 bis 12 im einzelnen dargestellt. Die Drehscheibe 152 ist an zwei einander diametral gegenüberliegenden Stellen mit nach oben ragenden segmentförmigen Vorsprüngen 165 versehen, deren einander zugekehrten Flächen gerade Führungsflächen 166 für zwei Führungsleisten 170 eines ersten Schlittens 167 bilden. Auf diesen Vorsprüngen 165 sind sich mit diesen Vorsprüngen deckende segmentförmige Halteplatten 168, z.B. mittels Schrauben, befestigt, um das Abheben des ersten Schlittens 167 von der Drehscheibe 152 zu verhindern. In Fig.10 ist zur Verdeutlichung der Darstellung die Halteplatte 168 auf der linken Seite weggelassen. Durch beidseitige Anschläge 169, die von Vorsprüngen an den Enden der Führungsleisten 170 gebildet sind, ist die Verschiebbarkeit des ersten Schlittens 167 auf der Drehscheibe 152 begrenzt.

Der erste Schlitten 167 weist zwei einander parallele, zu den Führungsflächen 166 senkrechte Führungsschienen 171 für einen zweiten Schlitten 172 auf. Dieser zweite Schlitten 172 dient als Halter für das auf dem Monitor abzubildende, in der Zeichnung nicht dargestellte Dia und weist zu diesem Zweck eine von einem in der Draufsicht rechteckigen Raum 173 umgebene Glasscheibe 174 für die Anlage des Diafilmes oder der den Diafilm bedeckenden eingerahmten Glasscheibe auf. Mit dem zweiten Schlitten 172 ist mittels eines Scharniers 175 ein als Ganzes mit 176 bezeichneter Deckel schwenkbar verbunden, der in den Fig.10 und 11 weggelassen und nur in den Fig.4 und 12 dargestellt ist. Dieser Deckel ist in Fig.12 auf der rechten Seite im Schnitt dargestellt. Der Deckel 176 weist eine Grundplatte 177 auf, die mit einer Aussparung 178 versehen ist, die eine Aufnahme für den flanschartigen Rand 179 einer Glasscheibe 181 bildet, die durch am Rand 179 angreifende Federn 180 in der Aussparung 178 federnd nachgiebig gehalten ist.

Über der Glasscheibe 181 ist im Deckel 176 die Lampe 126 angeordnet. Die Glasscheibe 181 dient dazu, den Diafilm zwischen ihr und der Glasscheibe 174 glattzudrücken, wenn der Deckel 176 aus der in Fig.12 dargestellten angehobenen Stellung in seine auf den zweiten Schlitten 172 abgesenkte Stellung geschwenkt ist.

Der zweite Schlitten 172 ist innerhalb des ersten Schlittens 167, wie aus Fig.10 ersichtlich, zwischen den beiden Führungsleisten 170 des ersten Schlittens 167 verschiebbar. Der erste Schlitten 167 ist wiederum zusammen mit dem zweiten Schlitten in dem durch die Anschläge 169 begrenzten Bereich senkrecht zu der Verschieberichtung des zweiten Schlittens 172 verschiebbar. In der Drehscheibe 152 ist ein Durchbruch 182 vorgesehen, durch den das von der Lampe 156 durch die Glasscheibe 174 fallende Licht auf den Spiegel 131 fallen kann.

Der Bildwagen 123 besteht, wie das die Fig.8 und 9 zeigen, aus einer Blechplatte 182, deren in den Fig.8 und 9 rechts dargestellter Rand 183 hochgebogen und mit zwei Führungslöchern 184 versehen ist, in die die Führungsstangen 159 (Fig.5) eingreifen. Für ein drittes Führungsloch 185 ist ein in Fig.9 strichpunktiert dargestellter, im wesentlichen rechteckiger Streifen aus der Platte 182 herausgeschnitten und, wie aus Fig.8 ersichtlich ist, hochgebogen. Der neben dem Ausschnitt für den Streifen 186 verbleibende Teil der Platte 182 ist schmal ausgeführt und zur Bildung des Vorsprunges 146 für die Anlage an der zweiten Tastrolle 145, wie aus Fig.8 ersichtlich, nach unten abgebogen. Auf diesem Bildwagen 123 ist die elektronische Einrichtung 151 (Fig.4) so angeordnet, daß das vom Spiegel 131 reflektierte und vom Dia kommende Lichtbündel durch das in Fig.5 nicht dargestellte Objektiv 135 (Fig.4) auf die Sensorfläche des CCD-Sensors fällt.

Um die Übersichtlichkeit der Fig.5 nicht zu beeinträchtigen, sind in dieser Figur nur der Gegenstandswagen 121 und der Bildwagen 123 dargestellt. Die Anordnungen der Sensorfläche des CCD-Sensors und des Objektivs ergeben sich ohne weiteres aus den Fig.1 und 2 (siehe Bezugszahlen 32 bzw. 35). Auf jeden Fall ist auch bei diesem Ausführungsbeispiel das Objektiv im Strahlengang zwischen dem mit dem Gegenstandswagen bewegbaren Spiegel 131 und der mit dem Bildwagen bewegbaren Sensorfläche relativ zum Gehäuse 120 fest angeordnet, z.B. an den Stangen 159 befestigt.

Der Gegenstandswagen 121 und der Bildwagen 123 sind mit dem gleichen Getriebe 24 miteinander verbunden wie der Gegenstandswagen 21 und der Bildwagen 23 der prinzipiellen Ausführungsform nach den Fig.1 und 2.

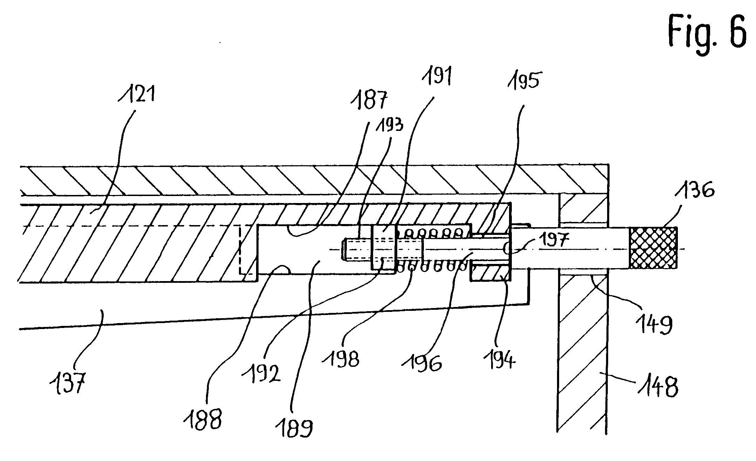

In Fig.6 ist die Verbindung der Rändelschraube 136 mit der Kurvenleiste 137 dargestellt. Diese ist im Gegenstandswagen 121 in einer Schwalbenschwanznut längsverschiebbar gehalten. Günstig ist es, wenn die beim Ausführungsbeispiel als Schwalbenschwanznut ausgebildete Führung für die Kurvenleiste 137 als eine am Gehäuse 120 gesondert ausgebildet ist und lediglich für eine paßgenaue verschiebbare Lagerung der Kurvenleiste 131 dient, also von den Führungsmitteln unabhängig ist, mittels denen der Gegenstandswagen 121 längsbeweglich geführt ist (Stangen 159). Die Führungsmittel für den Gegenstandswagen 121 brauchen in diesem Falle nicht mit besonders hoher Genauigkeit, wie sie bei der Führung der Kurvenleiste 137 zu fordern ist, ausgebildet zu werden. Der Gegenstandwagen 121 ist bei solchen Ausführungsbeispielen mit der Kurvenleiste 137 über ein Koppelglied, beispielsweise einen Gelenkhebel, verbunden. Die Kurvenleiste 137 weist eine sich mit einer Aussparung 187 an dem vorderen, der Endwand 148 benachbarten Ende des Gegenstandswagens 121 deckende Aussparung 188 auf. Das Material dieser Aussparung 188 ist zu einem Flansch 191 hochgebogen, in dem eine Gewindebohrung 192 angeordnet ist, in die das Gewinde 193 der Rändelschraube 136 eingreift.

In der die Aussparung 187 begrenzenden Endwand 194 des Gegenstandswagens 121 ist eine Bohrung 195 vorgesehen, durch die der Gewindeschaft 196 hindurchgreift. Der Gewindeschaft 196 geht über eine Schulter 197 in den Griffschaft der Rändelschraube 136 über, der durch die Aussparung 149 der Gehäuseendwand 148 durchgreift, wenn die optische Einrichtung auf die größtmögliche Vergrößerung eingestellt ist. Zwischen dem Flansch 191 und der Endwand 194 ist eine den Gewindeschaft 196 umgebende Schraubendruckfeder 198 angeordnet, durch die die Kurvenleiste in einer durch die Anlage der Schulter 197 an der Endwand 194 genau definierten Stellung gehalten wird.

Durch Drehen der Rändelschraube 136 kann somit die Kurvenleiste in ihrer Längsrichtung relativ zum Gegenstandswagen 121 verschoben und dadurch die durch das Getriebe 24 zwischen dem Gegenstandswagen 121 und dem Bildwagen 123 bedingte Scharfeinstellung der optischen Einrichtung der Vorrichtung vorgenommen werden.

Wie das in Fig.4 schematisch dargestellt ist, ist der Zwischenraum zwischen dem Gegenstandswagen 121 und der elektronischen Einrichtung 151 durch einen Faltenbalg 198 abgedeckt. Die Zugfeder 147 (Fig.5) des die beiden Wagen 121 und 123 miteinander verbindenden Getriebes 24 ist bei dem Ausführungsbeispiel nach den Fig.4 bis 12 zwischen dem Bildwagen 123 und der hinteren Endwand 148′ des Gehäuses 120 gespannt. Durch eine selbsthemmende Wirkung des Zahnstangengetriebes 162,163,164 wird der Bildwagen 123 durch die Feder 147 in Richtung an den Gegenstandswagen gezogen.

Die Betriebsweise der in den Fig.4 bis 12 dargestellten Ausführungsform ist die gleiche wie bei dem in den Fig.1 bis 3 dargestellten Ausführungsbeispiel. Durch die im Ausführungsbeispiel nach den Fig.4 bis 12 gewählte Bauweise wird eine besonders einfache Bedienung der Vorrichtung gewährleistet. Die Bedienungsperson erfaßt mit ihrer Hand von oben den Gegenstandswagen 121 und mit zwei Fingern, z.B. dem Daumen und dem Zeigefinger, den Deckel 176. Durch Verschieben des Gegenstandswagens 121 kann die gewünschte Vergrößerung und durch Verschieben und Drehen des Deckels 176 der gewünschte Ausschnitt des Dias ausgesucht werden. Zum Auswechseln des betrachteten Dias muß der Deckel 176 lediglich um das Scharnier 175 hochgeklappt werden.

Anstatt den mittels des Deckels 176 bewegbaren Gegenstandshalter 172 mittels Führungsschienen und daran verschiebbaren Führungsschlitten für Bewegungen relativ zum Gehäuse 120 in Längsrichtung und in senkrecht hierzu verlaufender Querrichtung zu führen, könnte der Gegenstandshalter 172 auch über eine Doppelparallelogrammführung mit dem Gegenstandswagen verbunden sein, wobei der Gegenstandshalter nach Art eines Linealkopfes einer Zeichenmaschine beweglich geführt wäre.

Bei den beiden dargestellten Ausführungsbeispielen ist das Objektiv 35 mit dem Gehäuse 20 und 120 fest verbunden. Zum Einstellen der verschiedenen Vergrößerungen sind der Gegenstandswagen 21 und 121 und der Bildwagen 23 und 123 relativ zueinander immer so verstellbar, daß der gewünschte Ausschnitt des Dias scharf auf der Sensorfläche 33 abgebildet wird. Die der Erfindung zu Grunde liegende Idee kann jedoch auch dadurch verwirklicht werden, daß der Gegenstand, z.B. das Dia, und/oder die Sensorfläche 33 gegenüber dem Gehäuse 20 bzw. 120 fest angeordnet sind und andere längs der optischen Achse einstellbare Elemente nach der bekannten mathematischen Beziehung durch ein Getriebe miteinander verbunden sind.

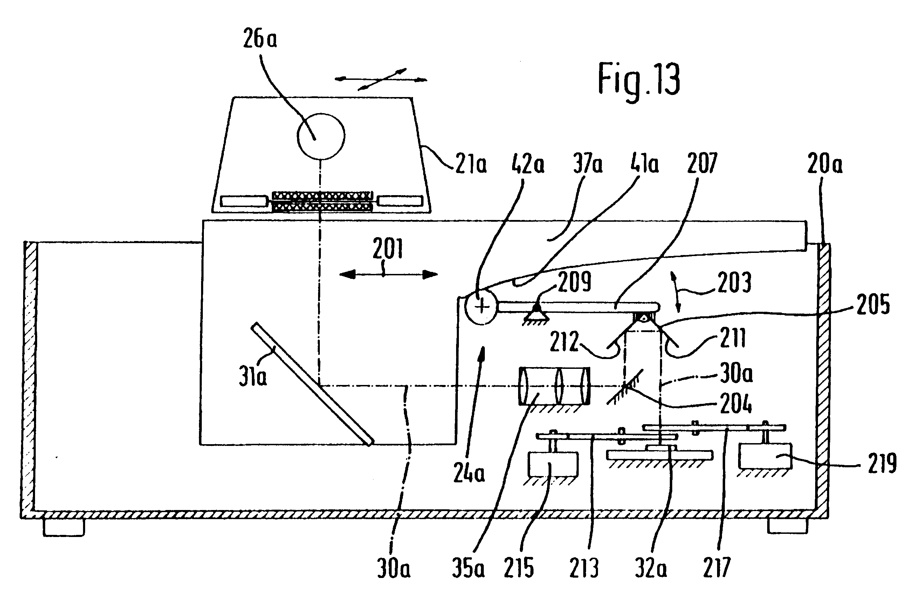

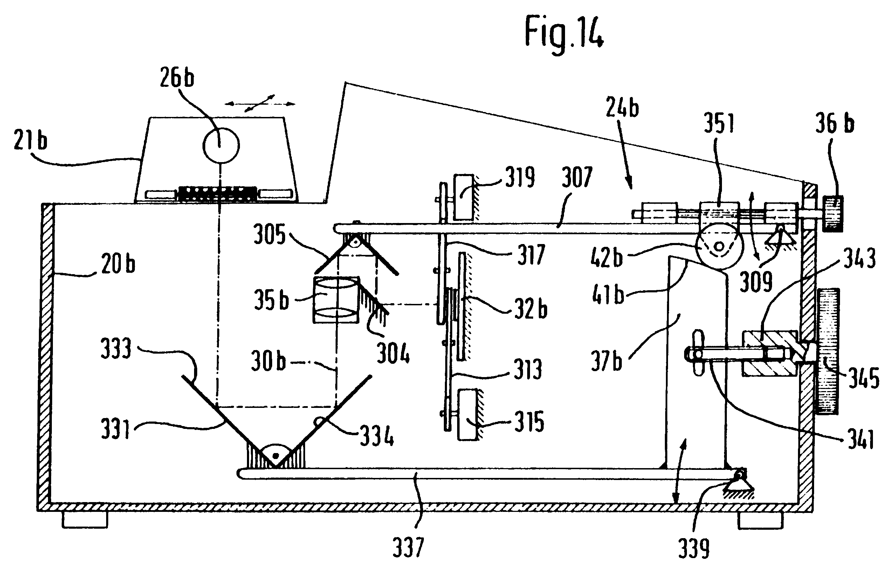

Zwei Beispiele derartiger Ausführungsformen sind in den Fig. 13 und 14 gezeigt. Diese sind lediglich zur Verdeutlichung des Funktionsprinzips dienende, stark schematisch vereinfacht gezeichnete Darstellungen, in denen Einzelheiten, die im handwerklichen Können des Fachmanns liegen, der Übersichtlichkeit wegen weggelassen sind. Diejenigen Teile, die solchen des in Fig. 1 und 2 dargestellten Ausführungsbeispiels in ihrer Funktion entsprechen, sind mit den gleichen, jedoch mit a bzw. b versehenen Bezugszahlen bezeichnet, so daß durch diesen Hinweis über die Bezugszahlen bei der Beschreibung der folgenden Ausführungsbeispiele auf die Beschreibung des erstbeschriebenen Ausführungsbeispiels Bezug genommen wird, um unnötige Wiederholungen zu vermeiden.

Bei dem Beispiel nach Fig. 13 ist der Gegenstandswagen 21a in gleicher Weise relativ zum Gehäuse 20a längsbeweglich wie der Gegenstandswagen 21 des erstbeschriebenen Beispiels. Wie bei den zuvor beschriebenen Beispielen ist auch eine die Drehung des Gegenstandsträgers ermöglichende Einrichtung (Drehscheibe) vorhanden.

Bei der in Längsrichtung erfolgenden Verschiebung des Gegenstandswagens 21a erfolgt die Mitnahme der Kurvenleiste 37a in deren Führungsrichtung, die mit einem Doppelpfeil 201 angegeben ist. Bei dieser Bewegung von Gegenstandswagen 21a und Kurvenleiste 37a relativ zum Gehäuse 20a und relativ zu dem fest angebrachten Objektiv 35a ergibt sich eine Änderung der Gegenstandsweite. Die entsprechende Anpassung der Bildweite mit Hilfe des Getriebes 24a erfolgt durch einen Dachspiegel 205, der im Strahlengang zwischen Objektiv 35a und einem dem CCD-Sensor 32a vorgeschalteten festen Umlenkspiegel 204 angeordnet und mittels des Getriebes 24a in Richtung eines Doppelpfeils 203 verstellbar ist. Der Dachspiegel 205 ist am Endbereich eines zweiarmigen Schwenkhebels 207 fest angebracht, der am Gehäuse 20a bei 209 schwenkbar gelagert ist und an seinem dem Dachspiegel 205 entgegengesetzten Endbereich eine drehbare Tastrolle 42a trägt, die durch Gewichtskrafteinfluß des wesentlich länger ausgebildeten, den Dachspiegel 205 tragenden anderen Hebelarms an die Führungskurve 41a der Kurvenleiste 37a angedrückt ist. Beim Ablaufen der Tastrolle 42a an der Führungskurve 41a ergibt sich die erwähnte Lageeinstellung des Dachspiegels 205 in Richtung des Doppelpfeils 203, wodurch eine entsprechende Änderung der Bildweite bewirkt wird.

Trotz der verhältnismäßig großen Länge des den Dachspiegel 205 tragenden Hebelarms des Hebels 207 erfolgt die Lageverstellung des Dachspiegels 205 nicht geradlinig längs der optischen Achse 30a sondern leicht bogenförmig. Da beide zusammenwirkenden reflektierenden Flächen 211 und 212 des Dachspiegels 205 miteinander einen rechten Winkel einschließen, führt die geringfügige Schwenkbewegung des Dachspiegels 205 nicht zu einer Änderung der Winkellage der optischen Achse 30a sondern lediglich zu einer geringfügigen seitlichen Strahlenversetzung, also zu einer Lageversetzung des auf dem Sensor 32a abgebildeten Ausschnittes des Gegenstandes. Dies kann erforderlichenfalls durch eine die Ausschnittsveränderung bewirkende Verstellung des Gegenstandswagens 21a kompensiert werden.

Wie bei dem erstbeschriebenen Ausführungsbeispiel, wo mittels der Schraube 36 eine relative Lageverstellung zwischen Kurvenleiste 37 und Gegenstandswagen 21 zur Scharfeinstellung vorhanden ist, sind auch bei dem Beispiel von Fig. 13 nicht gezeigte Einstellmittel für diesen Zweck vorhanden.

Wie erwähnt, besteht bei Fig. 13 der grundlegende Unterschied zum erstbeschriebenen Beispiel darin, daß der CCD-Sensor 32a fest mit dem Gehäuse 20a verbunden ist. Die feste Anordnung ist besonders günstig, wenn dem Sensor 32a Zusatzeinrichtungen optisch vorgeschaltet sind. Beim gezeigten Beispiel handelt es sich hierbei um eine drehbar gelagerte Farbfilterscheibe 213, die mittels eines Stellmotors 215 drehbar ist, um nacheinander gewünschte Farbfilterbereiche der Farbfilterscheibe 213 auf die optische Achse 30a auszurichten. In bekannter Weise läßt sich dadurch bei Verwendung eines schwarz-weiß empfindlichen Sensors 32a ein Farb-Videosignal erzeugen.

Als weitere Zusatzeinrichtung ist ein in ähnlicher Weise wie die Farbfilterscheibe 213 drehbar gelagertes Rad 217 vorgesehen, das durch einen Stellmotor 219 in Schritten drehbar ist. Das Rad 217 weist in konzentrisch zu seiner Drehachse gelegenen Ausschnitten planparallele optische Platten auf, von denen je eine gewünschte planparallele Platte auf die optische Achse 30a ausrichtbar ist. Die planparallelen Platten weisen relativ zur optischen Achse 30a unterschiedliche Neigungen auf. Dadurch bildet das Rad 217 mit den planparallelen Platten einen steuerbaren optischen Strahlversetzer. Mit dessen Hilfe ist es möglich, das Videosignal in mehreren Schritten aufzubauen, wobei durch Wahl der Drehstellung des Rades 217 bei jedem Schritt eine Strahlversetzung in der Weise vorgenommen wird, daß Bildinformationen, die ohne Strahlversetzung in die unwirksamen Lücken zwischen aneinandergrenzenden Pixeln des Sensors 32a fallen würden, auf den empfindlichen Bereich der betreffenden Pixel auftreffen und daher für die Bildsignalerzeugung nicht verlorengehen.

Das Beispiel nach Fig. 14 sieht, ebenso wie das Beispiel nach Fig. 13, eine feste Anordnung des CCD-Sensors 32b relativ zum Gehäuse 20b vor. Dem Sensor 32b sind auch die gleichen Zustzeinrichtungen, wie sie zuvor beschrieben wurden, optisch vorgeschaltet, nämlich ein Farbfilterrad 313 mit einem Stellmotor 315 und ein Rad 317, das als Strahlversetzer dient und planparallele optische Platten trägt, wobei das Rad 317 durch einen Stellmotor 319 schrittweise drehbar ist.

Wie bei dem Beispiel nach Fig. 13 ist im Strahlengang zwischen Objektiv 35b und einem dem Sensor 32b vorgeschalteten festen Umlenkspiegel 304 ein Dachspiegel 305 als mittels des Getriebes 24b längs der optischen Achse 30b einstellbares Element vorhanden. Der Dachspiegel 305 befindet sich an dem Endbereich eines hier einarmigen, um ein Lager 309 schwenkbaren Schwenkhebels 307, der über eine durch Gewichtskrafteinfluß des Hebels 307 an einer Führungskurve 41b einer Führungsleiste 37b geführte Tastrolle 42b lageverstellbar ist, so daß der Dachspiegel 305 zur Bildweitenänderung mittels des von der Tastrolle 42b und der FÜhrungskurve 41b gebildeten Getriebes 24b einstellbar ist.

Im Unterschied zum Beispiel gemäß Fig. 13 erfolgt die Bewegung der Kurvenleiste 37b nicht durch Längsverschieben des Gegenstandswagens 21b, sondern dieser ist mit der Kurvenleiste 37b nicht gekoppelt. Der Gegenstandwagen 21b bildet bei dieser Ausführungsform daher auch kein längs der optischen Achse 30b einstellbares Element zur Änderung der Gegenstandsweite. Zu diesem Zweck ist vielmehr ein zweiter Dachspiegel 331 vorhanden, der zwei einen rechten Winkel miteinander einschließende reflektierende Flächen 333 und 334 aufweist und am Endbereich eines zweiten Schwenkhebels 337 fest angebracht ist. Die Bewegung des zweiten Dachspiegels 331 zur Einstellung der Gegenstandweite erfolgt durch Verändern der Schwenkstellung des Schwenkhebels 337 um sein Schwenklager 339 mit Hilfe einer Gewindespindel 341, die an der Kurvenleiste 37b angelenkt ist, welche ihrerseits mit dem Hebel 337 fest verbunden ist. Die Gewindespindel 341 ist mit einer Stellmutter 343 in Gewindeeingriff, die mittels eines Handknopfes 345 drehbar ist.

Bei der Schwenkbewegung der Kurvenleiste 37b um das Schwenklager 339 läuft die Tastrolle 42b an der Führungskurve 41b ab, wodurch der Dachspiegel 305 eine zur Bewegung des zweiten Dachspiegels 331 so in Bezug stehende Bewegung durchführt, daß der Abbildungsgleichung genüge geleistet wird. Um eine relative Lageverstellung zwischen Dachspiegel 305 und zweitem Dachspiegel 331 zum Zwecke einer Scharfstellung zu ermöglichen, ist die Tastrolle 42b mit dem Schwenkhebel 307 nicht fest verbunden, sondern an einem Lagerbock 351 gelagert, der längs des Hebels 307 mit Hilfe einer Einstellschraube 36b verstellbar ist, die funktionsmäßig der Schraube 36 von Fig. 1 und 2 entspricht.

Durch eine im handwerklichen Können des Fachmanns liegende Beleuchtung eines undurchsichtigen Bildes anstelle eines Dias kann das Bild in ähnlicher Weise auf dem CCD-Sensor abgebildet werden.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

**Patentansprüche**

1. Vorrichtung zum Umwandeln der Lichtsignale von gewünschten Ausschnitten eines flachen Gegenstandes, der sich an einem Gegenstandsträger im wesentlichen in einer Dingebene erstreckt, in Videosignale mittels eines an einem Träger befindlichen CCD-Sensors (32, 32a, 32b) und einer ein Objektiv (35, 35a, 35b) aufweisenden optischen Einrichtung, die einen Strahlengang mit einer optischen Achse (30, 30a, 30b) definiert und zur Abbildung des gewünschten Ausschnittes auf dem CCD-Sensor (32, 32a, 32b) einstellbar ist, dadurch gekennzeichnet, daß als Objektiv (35, 35a, 35b) ein solches mit konstanter Brennweite vorhanden ist, daß die optische Einrichtung mindestens zwei längs der optischen Achse (30, 30a, 30b) einstellbare Elemente aufweist, deren Lage die Bild- und die Gegenstandsweite bestimmen, und daß beide Elemente durch ein Getriebe (24, 240, 246) so verbunden sind, daß bei den durch dieses eingestellten Bild- und Gegenstandsweiten das Objektiv (35, 35a, 35b) den Ausschnitt des Gegenstandes scharf auf dem CCD-Sensor (32, 32a, 32b) abbildet.

2. Vorrichtung nach Anspruch 1, dadurch gekennzeichnet, daß als eines der längs der optischen Achse (30, 30a) einstellbaren Elemente der Gegenstandsträger vorgesehen und dieser am Gehäuse beweglich gelagert und mit dem Getriebe (24, 24a) verbunden ist.

3. Vorrichtung nach Anspruch 1 oder 2, dadurch gekennzeichnet, daß als eines der längs der optischen Achse (30) einstellbaren Elemente der Träger des CCD-Sensors (32) vorgesehen und dieser am Gehäuse (20, 120) beweglich gelagert und mit dem Getriebe (24) verbunden ist.

4. Vorrichtung nach einem der Ansprüche 1 bis 3, dadurch gekennzeichnet, daß als eines der längs der optischen Achse (30a, 30b) einstellbaren Elemente ein mit dem Getriebe (24a, 24b) verbundener, im Strahlengang beweglich angeordneter Spiegel (205, 305, 331) vorgesehen ist.

5. Vorrichtung nach einem der Ansprüche 2 bis 4, dadurch gekennzeichnet, daß der beweglich gelagerte Träger als relativ zum Gehäuse längs der optischen Achse (30, 30a) verfahrbarer Wagen ausgebildet ist.

6. Vorrichtung nach einem der Ansprüche 1 bis 5, dadurch gekennzeichnet, daß ein Gegenstandshalter vorhanden ist, der mit dem Gegenstandsträger relativ zu diesem in der Dingebene verstellbar verbunden ist.

7. Vorrichtung nach Anspruch 6, dadurch gekennzeichnet, daß der Gegenstandshalter als ein zweiter Schlitten (172) ausgebildet ist, der längs einer geraden zweiten Bahn auf einem ersten Schlitten (167) verfahrbar ist, der längs einer ersten geraden Bahn verfahrbar ist, die zur zweiten Bahn senkrecht verläuft.

8. Vorrichtung nach Anspruch 6 oder 7, dadurch gekennzeichnet, daß der Gegenstandshalter auf einer Drehscheibe (152) angeordnet ist, die um eine zur Dingebene senkrechte Achse drehbar ist.

9. Vorrichtung nach Anspruch 8, dadurch gekennzeichnet, daß die Drehscheibe (152) auf dem Gegenstandsträger drehbar gelagert ist und daß die erste Bahn nach Anspruch 7 auf der Drehscheibe (152) gelagert ist.

10. Vorrichtung nach einem der Ansprüche 1 bis 9, dadurch gekennzeichnet, daß am Gegenstandträger ein Spiegel (31, 131, 31a) fest angeordnet ist, mittels dessen der Strahlengang umgelenkt wird, um eine gewünschte Winkelstellung der Dingebene relativ zur Bildebene und/oder zur Hauptebene des Objektivs (35, 35a) zu ermöglichen.

11. Vorrichtung nach Anspruch 10, dadurch gekennzeichnet, daß der Spiegel (31, 131, 131a) mit der optischen Achse (30, 30a) einen Winkel von 45° bildet.

12. Vorrichtung nach einem der Ansprüche 3 bis 11, dadurch gekennzeichnet, daß das Objektiv (30, 30a) im Gehäuse (20, 20a) fest angeordnet ist und der Träger des CCD-Sensors (32, 32a) und/oder der Gegenstandsträger die verfahrbaren Elemente bilden.

13. Vorrichtung nach einem der Ansprüche 1 bis 12, dadurch gekennzeichnet, daß für die Scharfeinstellung der optischen Einrichtung das Getriebe (24, 124, 24a, 24b) verstellbar ist.

14. Vorrichtung nach einem der Ansprüche 1 bis 13, dadurch gekennzeichnet, daß das Getriebe eine relativ zum Gehäuse (20, 120, 20a, 20b) bewegliche Führungskurve (41, 141, 41a, 41b) aufweist, an der zumindest ein Tastglied (42, 42a, 42b) mindestens eines der längs der optischen Achse (30, 30a, 30b) einstellbaren Elemente geführt ist.

15. Vorrichtung nach Anspruch 14, dadurch gekennzeichnet, daß die Führungskurve (41, 141) mit dem Gegenstandswagen verbunden ist und das Getriebe außerdem aufweist:
   - einen im Gehäuse (20) drehbar gelagerten Hebel (43),
   - eine erste Tastrolle (42) und eine zweite Tastrolle (45), die am Hebel (43) drehbar gelagert sind, von denen die erste an der Führungskurve (41,141) und die zweite am Träger (23,123) des CCD-Sensors anliegen, und
   - eine Feder (47,147), die auf den Sensor-Träger (23,123) in einer die Bildweite (b) verringernden Richtung einwirkt und dadurch den Sensorträger (23,123) an die zweite Rolle (45) und über den Hebel (43) die erste Rolle (42) an die Führungskurve (41,141) drückt.

16. Vorrichtung nach Anspruch 15, dadurch gekennzeichnet,
   - daß die Führungskurve in ihrer Längsrichtung verstellbar mit dem Gegenstandswagen (21,121) verbunden ist und
   - daß zum Verstellen der Führungskurve (41,141) eine Schraube (36,136) und in der einen Endwand (48,148) des Gehäuses (20,120) eine Aussparung (49,149) für diese Schraube vorhanden sind, aus der die Schraube herausragt, wenn der Gegenstandswagen (21,121) für die kleinste Gegenstandsweite ($g_{min}$) eingestellt ist.

17. Vorrichtung nach einem der Ansprüche 2 bis 16, dadurch gekennzeichnet,
   - daß im Gehäuse (120) zwei zur optischen Achse parallele Führungsstangen (159) für den Gegenstandswagen (121) und den Träger (123) des CCD-Sensors vorhanden sind,
   - daß der Gegenstandswagen (121) einen Spiegel (131), der zur Bildung einer Umlenkung der optischen Achse mit dieser einen Winkel von 45° einschließt, und zwei miteinander verbundene Teile (153,154) aufweist, von denen der eine obere Teil (153) über einer Deckwand (160) des Gehäuses (120) angeordnet ist und der andere untere Teil (154) im Inneren des Gehäuses (120) auf den Führungsstangen (159) geführt ist,

- daß auf dem oberen Teil (153) des Gegenstandswagens (121) eine Drehscheibe (152) gelagert ist und
- daß der Gegenstandshalter mit einer über ihm angeordneten Lampe (126) eine auf der Drehscheibe (152) in zwei zur Umlenkung der optischen Achse senkrechte Richtungen verschiebbare und um die Umlenkung drehbare bauliche Einheit (125) bildet.

18. Vorrichtung nach einem der Ansprüche 15 bis 17, dadurch gekennzeichnet, daß die Feder (147) zwischen dem Gehäuse (120) und dem Bildwagen (123) gespannt ist.

19. Vorrichtung nach Anspruch 4 und einem der übrigen Ansprüche 1 bis 18, dadurch gekennzeichnet, daß der bewegliche Spiegel in Form eines Dachspiegels (205, 305, 331) ausgebildet ist, der zwei im rechten Winkel zueinander stehende reflektierende Flächen (211, 212; 333, 334) besitzt, die für eine Umlenkung der Richtung der optischen Achse um 180° miteinander zusammenwirken, und daß der Dachspiegel (205, 305, 331) mittels des Getriebes (24a, 24b) zumindest im wesentlichen längs der optischen Achse (30a, 30b) verstellbar ist.

20. Vorrichtung nach Anspruch 19, dadurch gekennzeichnet, daß der Dachspiegel (205, 305) im Strahlengang zwischen Objektiv (30a, 30b) und CCD-Sensor (32a, 32b) angeordnet ist.

21. Vorrichtung nach Anspruch 19, dadurch gekennzeichnet, daß der Gegenstandsträger (21b) und der Träger des CCD-Sensors (32b) längs der optischen Achse (30b) unverschiebbar sind und daß sowohl im Strahlengang zwischen dem Gegenstandsträger (21b) und dem Objektiv (35b) als auch im Strahlengang zwischen diesem und dem CCD-Sensor (32b) je ein Dachspiegel (331 bzw, 305) angeordnet ist.

22. Vorrichtung nach einem der Ansprüche 1 bis 21, dadurch gekennzeichnet, daß im Strahlengang zwischen dem Objektiv (35, 35a, 35b) und dem CCD-Sensor (32, 32a, 32b) ein steuerbarer Strahlenversetzer angeordnet ist, der eine wahlweise Versetzung der auf den CCD-Sensor (32, 32a, 32b) fallenden Lichtstrahlen längs der Ebene von dessen Sensorfläche (33) ermöglicht.

23. Vorrichtung nach Anspruch 22, dadurch gekennzeichnet, daß der steuerbare Strahlenversetzer einen mittels eines Stellantriebes (219, 319) bewegbaren Halter für eine Mehrzahl planparaller optischer Platten besitzt, die mit unterschiedlicher Neigung zur optischen Achse (30a, 30b) angeordnet und durch Bewegen des Halters mittels des Stellantriebes (219, 319) wahlweise in den Strahlengang einführbar sind.

## Claims

1. Device for converting into video signals the light signals from desired sections of a flat object, which extends on an object carrier substantially in an object plane, by means of a CCD-sensor (32, 32a, 32b) mounted on a carrier and an optical system which comprises a lens unit (35, 35a, 35b), defines a raypath with an optical axis (30, 30a, 30b) and is adjustable for imaging said desired section on the CCD-sensor (32, 32a, 32b), characterized in that the lens unit (35, 35a, 35b) has a constant focal length, in that the optical system comprises at least two elements which are adjustable along the optical axis (30, 30a, 30b) and whose position determines the image and the object distances, and in that the two elements are connected by a gear mechanism (24, 240, 246) such that when the image and object distances have been adjusted by said gear mechanism the lens unit (35, 35a, 35b) sharply images the section of the object on the CCD-sensor (32, 32a, 32b).

2. Device according to claim 1, characterized in that one of the elements adjustable along the optical axis (30, 30a) is the object carrier which is movably mounted on the housing and connected with the gear mechanism (24, 24a).

3. Device according to claim 1 or 2, characterized in that one of the elements adjustable along the optical axis (30) is the carrier of the CCD-sensor (32) which is movably mounted on the housing (20, 120) and connected with the gear mechanism (24).

4. Device according to one of claims 1 to 3, characterized in that one of the elements adjustable along the optical axis (30a, 30b) is a mirror (205, 305, 331) which is connected with the gear mechanism (24a, 24b) and movably arranged in the raypath.

5. Device according to one of claims 2 to 4, characterized in that the movably mounted carrier is designed as a carriage which is movable relative to the housing along the optical axis (30, 30a).

6. Device according to one of claims 1 to 5, characterized in that an object holder is provided which is connected with the object carrier so as to be adjustable relative to said carrier in the object plane.

7. Device according to claim 6, characterized in that the object holder is designed as a second carriage (172) which is movable along a straight second path on the first carriage (167) which is movable along a first straight path vertically to said second path.

8. Device according to claim 6 or 7, characterized in that the object holder is arranged on a turntable (152) which is rotatable about an axis perpendicular to the object plane.

9. Device according to claim 8, characterized in that the turntable (152) is mounted for rotation on the object carrier and in that the first path according to claim 7 is positioned on the turntable (152).

10. Device according to one of claims 1 to 9, characterized in that a mirror (31, 131, 31a) is fixedly arranged on the object carrier, said mirror deflecting the raypath in order to ensure a desired angular position of the object plane relative to the image plane and/or the chief plane of the lens unit (35, 35a).

11. Device according to claim 10, characterized in that the mirror (31, 131, 131a) forms an angle of 45″ with the optical axis (30, 30a).

12. Device according to one of claims 3 to 11, characterized in that the lens unit (30, 30a) is fixedly arranged in housing (20, 20a) and in that the carrier of the CCD-sensor (32, 32a) and/or the object carrier represent the movable elements.

13. Device according to one of claims 1 to 12, characterized in that the gear mechanism (24, 124, 24a, 24b) is adjustable for sharp focussing of the optical system.

14. Device according to one of claims 1 to 13, characterized in that the gear mechanism has a cam (41, 141, 41a, 41b) which is movable relative to the housing (20, 120, 20a, 20b) and on which at least one follower member (42, 42a, 42b) of at least one of the elements is guided that are adjustable along the optical axis (30, 30a, 30b).

15. Device according to claim 14, characterized in that the cam (41, 141) is connected with the object carriage and in that the gear mechanism moreover comprises:
    - a lever (43) mounted for rotation in housing (20),
    - a first follower roller (42) and a second follower roller (45) which are mounted for rotation on lever (43), and of which the first engages the cam (41, 141) and the second the carrier (23, 123) of the CCD-sensor,
      and
    - a spring (47, 147) which biases the sensor carrier (23, 123) in a direction reducing the image distance (b) and thus urges the sensor carrier (23, 123) into contact with the second follower roller (45) and, via lever (43), the first follower roller (42) into contact with the cam (41, 141).

16. Device according to claim 15, characterized in that
    - the cam is connected with the object carriage (21, 121) so as to be adjustable in its longitudinal direction and
    - a screw (36, 136) is provided for adjusting the cam (41, 141) and a recess (49, 149) is provided for said screw in one end wall (48, 148) of housing (20, 120), said screw extending from said recess when the object carriage (21, 121) is set to the smallest object distance ($g_{min}$).

17. Device according to one of claims 2 to 16,
    characterized in that
    - the housing (120) includes two guide rods (159) parallel to the optical axis for the object carriage (121) and the carrier (123) of the CCD-sensor,
    - the object carriage (121) comprises a mirror (131), which for deflecting the optical axis forms an angle of 450 with said axis, as well as two connected portions (153, 154) of which an upper portion (153) is arranged above a covering wall (160) of housing (120) and a lower portion (154) is guided in the interior of the housing (120) on the guide rods (159),
- a turntable (152) is mounted on the upper portion (153) of the object carriage (121), and
- the object holder along with a lamp (126) arranged above it forms a constructional unit (125) which is shiftable on said turntable (152) in two directions vertical to the optical axis for deflecting said axis, and is rotatable about the deflection path.

18. Device according to one of claims 15 to 17, characterized in that spring (147) is tensioned between housing (120) and sensor carriage (123).

19. Device according to claim 4 and one of the remaining claims 1 to 18, characterized in that the movable mirror takes the form of a roof mirror (205, 305, 331) which has two reflecting surfaces (211, 212; 333, 334) including a right angle and cooperating for deflecting the direction of the optical axis by 180" and in that the roof mirror (205, 305, 331) is adjustable by means of the gear mechanism (24a, 24b) at least substantially along the optical axis (30a, 30b).

20. Device according to claim 19, characterized in that the roof mirror (205, 305) is arranged in the raypath between lens unit (30a, 30b) and CCD-sensor (32a, 32b).

21. Device according to claim 19, characterized in that the object carrier (21b) and the carrier of the CCD-sensor (32b) are not shiftable along the optical axis (30b) and in that a roof mirror (331 and 305 resp.) is arranged both in the raypath between the object carrier (21b) and the lens unit (35b) and in the raypath between said lens unit and the CCD-sensor (32b).

22. Device according to one of claims 1 to 21, characterized in that in the raypath between lens unit (35, 35a, 35b) and CCD-sensor (32, 32a, 32b) a controllable beam displacement unit is arranged which allows the light beam impinging on the CCD-sensor (32, 32a, 32b) to be selectively displaced along the plane of the sensor surface (33).

23. Device according to claim 22, characterized in that the controllable beam displacement unit comprises a holder for a plurality of plane parallel optical flats, said holder being movable by means of an actuator (219, 319) and said flats being arranged at differing inclinations with respect to the optical axis (30a, 30b) and selectively movable into the raypath by moving said holder by means of said actuator (219, 319).

**Revendications**

1. Dispositif de conversion des signaux lumineux issus de sections souhaitées d'un objet plan, qui s'étend sur un porte-objet, sensiblement dans un plan-objet, en signaux vidéo à l'aide d'un capteur CCD (32, 32a, 32b), qui se trouve sur un support, et d'un dispositif optique présentant un objectif (35, 35a, 35b), qui définit un trajet de rayons avec un axe optique (30, 30a, 30b) et peut être réglé pour représenter la section souhaitée sur le capteur CCD (32, 32a, 32b), caractérisé en ce que l'objectif (35, 35a, 35b) a une distance focale constante et en ce que le dispositif optique présente au moins deux éléments ajustables le long de l'axe optique (30, 30a, 30b) dont les positions déterminent la distance image et la distance objet, et en ce que les deux éléments sont reliés par un dispositif d'entraînement (24, 240, 246), de telle sorte que, pour les distances image et objet réglées par celui-ci, l'objectif (35, 35a, 35b) forme une image nette de la section de l'objet sur le capteur CCD (32, 32a, 32b).

2. Dispositif selon la revendication 1, caractérisé en ce que le porte-objet constitue l'un des éléments ajustables le long de l'axe optique (30, 30a), ledit porte-objet étant monté sur le boîtier de manière à pouvoir se déplacer et étant relié au dispositif d'entraînement (24, 24a).

3. Dispositif selon la revendication 1 ou 2, caractérisé en ce que le support du capteur CCD (32) constitue l'un des éléments ajustables le long de l'axe optique (30), ledit support du capteur CCD (32) étant monté sur le boîtier (20, 120) de manière à pouvoir se déplacer et étant relié au dispositif d'entraînement (24).

4. Dispositif selon l'une quelconque des revendications 1 à 3, caractérisé en ce qu'il est prévu pour l'un des éléments ajustables le long de l'axe optique (30a, 30b) un miroir (205, 305, 331) relié au dispositif d'entraînement (24a, 24b) et agencé de manière à pouvoir se déplacer sur le trajet optique.

**5.** Dispositif selon l'une quelconque des revendications 2 à 4, caractérisé en ce que le support monté de manière à pouvoir se déplacer se présente sous la forme d'un chariot déplaçable par rapport au boîtier le long de l'axe optique (30, 30a).

**6.** Dispositif selon l'une quelconque des revendications 1 à 5, caractérisé en ce qu'il est prévu un support d'objet relié au porte-objet de manière à pouvoir se déplacer par rapport à celui-ci dans le plan-objet.

**7.** Dispositif selon la revendication 6, caractérisé en ce que le support d'objet se présente sous la forme d'un deuxième chariot (172) qui peut se déplacer le long d'une deuxième voie rectiligne sur un premier chariot (167), qui peut se déplacer le long d'une première voie rectiligne, qui s'étend perpendiculairement à la seconde voie.

**8.** Dispositif selon la revendication 6 ou 7, caractérisé en ce que le support d'objet est agencé sur un disque tournant (152), qui peut tourner autour d'un axe perpendiculaire au plan-objet.

**9.** Dispositif selon la revendication 8, caractérisé en ce que le disque tournant (152) est monté de manière à pouvoir tourner sur le porte-objet et en ce que la première voie selon la revendication 7 est montée sur le disque tournant (152).

**10.** Dispositif selon l'une quelconque des revendications 1 à 9, caractérisé en ce que sur le porte-objet est monté fixe un miroir (31, 131, 31a) à l'aide duquel le trajet des rayons est dévié pour permettre une position angulaire souhaitée du plan-objet par rapport au plan-image et/ou par rapport au plan principal de l'objectif (35, 35a).

**11.** Dispositif selon la revendication 10, caractérisé en ce que le miroir (31, 131, 131a) forme avec l'axe optique (30, 30a) un angle de 45°.

**12.** Dispositif selon l'une quelconque des revendications 3 à 11, caractérisé en ce que l'objectif (30, 30a) est agencé fixe dans le boîtier (20, 20a) et le support du capteur CCD (32, 32a) et/ou le porte-objet forment les éléments déplaçables.

**13.** Dispositif selon l'une quelconque des revendications 1 à 12, caractérisé en ce que le dispositif d'entraînement (24, 124, 24a, 24b) peut être déplacé pour assurer un réglage fin du dispositif optique.

**14.** Dispositif selon l'une quelconque des revendications 1 à 13, caractérisé en ce que le dispositif d'entraînement présente un dispositif à came (41, 141, 41a, 41b) mobile par rapport au boîtier (20, 120, 20a, 20b), came sur laquelle est guidé au moins un élément palpeur ou suiveur (42, 42a, 42b) d'au moins un des éléments ajustables le long de l'axe optique (30, 30a, 30b).

**15.** Dispositif selon la revendication 14, caractérisé en ce que la came (41, 141) est liée au chariot de l'objet et le dispositif d'entraînement présente en outre les éléments suivants :
- un levier (43) monté à rotation dans le boîtier (20),
- un premier galet suiveur (42) et un deuxième galet suiveur (45), qui sont montés à rotation sur le levier (43), le premier galet s'appliquant sur la came (41, 141) et le deuxième, sur le support (23, 123) du capteur CCD, et
- un ressort (47, 147), qui agit sur le support de capteur (23, 123) dans une direction permettant de réduire la distance image (b) et, par suite, presse le support de capteur (23, 123) sur le deuxième galet (45) et, via le levier (43), le premier galet (42) sur la came (41, 141).

**16.** Dispositif selon la revendication 15, caractérisé en ce que :
- la came est raccordée, de manière à pouvoir se déplacer dans sa direction longitudinale au chariot porte-objet (21, 121) et en ce que :
- pour déplacer la came (41, 141), il est prévu une vis (36, 136) et, dans la première paroi d'extrémité (48, 148) du boîtier (20, 120), un évidement (49, 149) pour cette vis, d'où la vis fait saillie lorsque le chariot porte-objet (21, 121) est réglé sur la plus petite distance objet ($g_{min}$).

**17.** Dispositif selon l'une quelconque des revendications 2 à 16, caractérisé en ce que :
- dans le boîtier (120) sont prévues deux tiges de guidage (159) parallèles à l'axe optique pour le chariot porte-objet (121) et pour le support (123) du capteur CCD,
- le chariot porte-objet (121) présente un miroir (131), qui, pour dévier l'axe optique, fait avec celui-ci un angle de 45°, et deux parties (153, 154) reliées l'une à l'autre, dont la première, supérieure, (153) est agencée sur une paroi de couverture (160) du boîtier (120) et dont l'autre, inférieure, (154) est guidée à l'intérieur du boîtier (120) sur les tiges de guidage (159),

- sur la partie supérieure (153) du chariot porte-objet (121) est monté un disque tournant (152), et
- le support d'objet forme avec une lampe (126) qui est agencée sur celui-ci une unité structurelle (125) qui peut se déplacer sur le disque tournant (152) dans deux directions perpendiculaires à la déviation de l'axe optique et qui peut tourner autour de cette déviation.

18. Dispositif selon l'une quelconque des revendications 15 ou 17, caractérisé en ce que le ressort (147) est tendu entre le boîtier (120) et le chariot image (123).

19. Dispositif selon la revendication 4 et selon l'une quelconque des autres revendications 1 à 18, caractérisé en ce que le miroir mobile se présente sous la forme d'un miroir supérieur (205, 305, 331), qui possède deux faces réfléchissantes (211, 212; 333, 334) qui forment un angle droit l'une par rapport à l'autre, qui coopèrent mutuellement pour dévier la direction de l'axe optique de 180°, et en ce que le miroir supérieur (205, 305, 331) peut être déplacé à l'aide du dispositif d'entraînement (24a, 24b) au moins en substance le long de l'axe optique (30a, 30b).

20. Dispositif selon la revendication 19, caractérisé en ce que le miroir supérieur (205, 305) est agencé sur le trajet des rayons entre l'objectif (30a, 30b) et le capteur CCD (32a, 32b).

21. Dispositif selon la revendication 19, caractérisé en ce que le porte-objet (21b) et le support du capteur CCD (32b) ne peuvent être déplacés le long de l'axe optique (30b) et en ce que, sur le trajet des rayons entre le porte-objet (21b) et l'objectif (35b) tout comme sur le trajet des rayons entre celui-ci et le capteur CCD (32b) est agencé respectivement un miroir supérieur (331 ou 305).

22. Dispositif selon l'une quelconque des revendications 1 à 21, caractérisé en ce que, sur le trajet des rayons entre l'objectif (35, 35a, 35b) et le capteur CCD (32, 32a, 32b) est agencé un convertisseur de rayons commandable, qui permet un déplacement au choix des rayons lumineux tombant sur le capteur CCD (32, 32a, 32b) le long du plan de sa surface de détection (33).

23. Dispositif selon la revendication 22, caractérisé en ce que le convertisseur de rayons commandable possède un support mobile à l'aide d'un dispositif de réglage (219, 319) pour une série de lames optiques plan-parallèles qui sont agencées avec une inclinaison différente par rapport à l'axe optique (30a, 30b) et peuvent être insérées au choix sur le trajet des rayons par déplacement du support à l'aide du dispositif de réglage (219, 319).

Fig.1

Fig.2

EP 0 482 047 B1

# Fig. 3

Fig. 4

Fig.5

Fig. 6

EP 0 482 047 B1

Fig. 8

185
184
186
183
123
146

Fig. 9

184
182
183
185
186
184
185
186
123

Fig. 7

161
161  160
153
159
154
159
163
158
164
121
158
120
162
137

Fig.11

Fig.10

Fig.12

Fig.13

# Fig.14

EP 0 482 047 B1